# EUROPÄISCHE PATENTSCHRIFT

(11) **EP 2 505 877 B1**
(45) Veröffentlichungstag und Bekanntmachung des Hinweises auf die Patenterteilung: **05.03.2014**
(21) Anmeldenummer: 11159979.1
(22) Anmeldetag: 28.03.2011
(51) Int. Cl.: F16H 57/04

(54) **Getriebe für industrielle Anwendungen**
Transmission for industrial applications
Engrenage pour applications industrielles

(43) Veröffentlichungstag der Anmeldung: 03.10.2012
(73) Patentinhaber: Siemens Aktiengesellschaft, 80333 München (DE)
(72) Erfinder: Steubler, Thomas, 09385, Lugau /Erzgeb. (DE)

(56) Entgegenhaltungen:
- EP-A1- 2 256 373
- WO-A1-2010/108601
- DE-A1- 4 132 780

## Beschreibung

Getrieben für industrielle Anwendungen oder Windkraftanlagen, insbesondere Planetengetrieben, kommt in industriellen Verarbeitungs- und Fertigungsprozessen vielfach eine zentrale Bedeutung zu. An Industrie- oder Windkraftanlagengetriebe wird eine breite Palette von komplexen Anforderungen gestellt. Beispielsweise ist eine dieser Anforderungen eine zuverlässige Funktion, die über eine lange Nutzungsdauer bei minimalem Wartungsaufwand zu gewährleisten ist. Industrielle Verarbeitungs- und Fertigungsprozesse oder Energieerzeugungsprozesse beeinträchtigende Anlagenausfälle können teuer werden, beispielsweise aufgrund kostspieliger Stillstandszeiten. Zur Überwachung und Sicherstellung einer zuverlässigen Funktion sind in Getrieben mitunter zahlreiche Sensoren oder Aktoren an rotierenden Bauteilen installiert.

In DE 28 57 678 A1 ist eine Vorrichtung zur Schmierstoffversorgung in einem Getriebe beschrieben, durch die einem Lager an einer Abtriebswelle des Getriebes ausreichend Schmierstoff zugeführt wird. Dabei wird Spritzöl in einem oberhalb des Lagers angeordneten Kanal aufgefangen und über ein Ölablenkelement sowie eine Lagerkappe zu einem Ölsammelbereich weitergeleitet. Aus dem Ölsammelbereich wird das Öl mittels eines Zentrifugal-Ölrings zum Lager gefördert.

Aus DE 41 31 164 A1 ist eine Anordnung bekannt, bei der eine Antriebswelle eines Getriebes mit einem Kegelrollenlager in einem Getriebegehäuse gelagert ist. In der Antriebswelle ist zentrisch eine Abtriebswelle mit einem Kegelrollenlager gelagert. Zur Schmierung der Kegelrollenlager wird Spritzöl in einem Sammelbehälter aufgefangen und über einen Ölkanal zu einer Verzweigungsstelle geleitet. Von der Verzweigungsstelle wird das Öl über getrennte Ölkanäle zu den Kegelrollenlagern verteilt.

In WO 2006/110641 ist ein Schmierungssystem für eine Maschine mit mehreren rotierenden Maschinenelementen beschrieben, das einen Sumpf zum Sammeln und Bereitstellen von Schmierstoff für die rotierenden Maschinenelemente umfaßt. Bei einem Anlauf der Maschine werden die rotierenden Maschinenelemente durch Schmierstoff im Sumpf tauchgeschmiert. Durch Zentrifugalwirkung wird Schmierstoff von den rotierenden Maschinenelementen aus dem Sumpf zu einem oberhalb des Sumpfs angeordneten Speicherbehälter transportiert. Hierdurch sinkt der Schmierstoff so weit ab, daß die rotierenden Maschinenelemente nach dem Anlauf der Maschine nicht mehr durch den Schmierstoff im Sumpf tauschgeschmiert werden, sondern über Ölzuführungskanäle mit dem Schmierstoff aus dem Speicherbehälter geschmiert werden.

Bei konventionellen Schmierstoffversorgungssystemen sind Schmierstoffauffang- und -verteilungseinrichtungen als Leitbleche oder integrierte Gußteile an Gehäuse- oder Rahmenteilen ausgeführt. Insbesondere an schwer zugänglichen Stellen ist eine Anordnung von Leitblechen oder integrierten Gußteilen äußerst aufwendig. Bei Schmierstoffauffang- oder -verteilungselementen, die in einer Integralbauweise als Gußteile an Gehäuse- oder Rahmenteile einstückig angeformt sind, entstehen außerdem erhöhte Aufwände für eine Erstellung von Guß-Modellen und für eine Aufbereitung von Gußteilen nach einem Gußvorgang, beispielsweise durch Reinigungsstrahlen oder Putzen der Gußteile. Derartige Fertigungsschritte sind schwer zu automatisieren und entsprechend kostenintensiv.

Aus US 4,359,909 ist eine Vorrichtung zur Schmierstoffversorgung eines Lagers in einem Getriebe mit zumindest einem Schmierstoffauffangbehälter bekannt. Der Schmierstoffauffangbehälter umfaßt einen zu einer Oberseite geöffneten Teil zum Auffangen von einfallendem oder eingespritztem Schmierstoff und einen stutzenartigen Teil zur Schmierstoffweiterleitung zum Lager. Der Schmierstoffauffangbehälter ist mit dem stutzenartigen Teil in eine Öffnung eines Getriebegehäuseteils gesteckt.

In EP 2 256 373 A1 ist eine Vorrichtung zur Schmierstoffversorgung eines Lagers in einem Getriebe mit zumindest einem Schmierstoffauffangbehälter aus Kunststoff beschrieben. Der Schmierstoffauffangbehälter umfaßt einen zu einer Oberseite geöffneten Teil zum Auffangen von einfallendem oder eingespritztem Schmierstoff und einen stutzenartigen Teil zur Schmierstoffweiterleitung zum Lager. Mit dem stutzenartigen Teil ist der Schmierstoffauffangbehälter in eine Öffnung eines Getriebegehäuseteils steckbar und dort mit dem Getriebegehäuseteil verklebt.

Die in DE 41 32 780 A1 beschriebene Erfindung, das den nächstliegenden Stand der Technik repräsentiert, bezieht sich auf ein Zahnradgetriebe und insbesondere auf die Schmierung der Lagerstellen der Getriebewellen, die nicht in den Ölsumpf eintauchen. Zur Verringerung des baulichen Aufwandes und zur Vermeidung der Anschaffungs- und Betriebskosten einer Ölpumpe wird vorgeschlagen, für jede aus zwei übereinander angeordneten, miteinander kämmenden Zahnrädern gebildete Getriebestufe eine Schöpf- und Verteilereinrichtung für Getriebeöl vorzusehen. Diese wird dadurch gebildet, dass an einer Stirnseite zweier kämmender Zahnräder und unterhalb des an ihrem Zusammenlauf gebildeten Zwickels eine Ölsammelwanne angeordnet ist, durch die das von dem unteren Zahnrad aus dem Ölsumpf mitgeschleppte und im Zwickel durch das obere Zahnrad ausgepresste Getriebeöl aufgefangen und an die tiefer gelegenen Schmierstellen verteilt wird.

Der vorliegenden Erfindung liegt die Aufgabe zugrunde, ein Getriebe für industrielle Anwendungen zu schaffen, das ein zuverlässiges und kostengünstig zu realisierendes Schmierstoffversorgungssystem aufweist.

Diese Aufgabe wird erfindungsgemäß durch ein Getriebe mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Getriebe für industrielle Anwendungen umfaßt zumindest zwei von einem Getriebegehäuse umfaßte Zahnräder, die miteinander in Eingriff stehen, sowie eine Antriebswelle und eine Abtriebswelle, die durch jeweils eine Öffnung am Getriebegehäuse treten. Des weiteren ist zumindest ein stirnseitig an einem ausgewählten Zahnrad angeordneter Schmierstoffauffangbehälter vorgesehen, der eine obere Öffnung zum Auffangen von einfallendem oder eingespritztem Schmierstoff und einen Bodenabschnitt mit einem stutzenartigen Teil zur Schmierstoffweiterleitung zu einer Schmierungsstelle im Getriebe umfaßt. An der Öffnung des Schmierstoffauffangbehälters ist ein Schmierstoffabstreifer angeformt, der als zum ausgewählten Zahnrad vorstehende Kante ausgebildet und auf eine äußere radiale Stirnseitenfläche des ausgewählten Zahnrads ausgerichtet ist. Die äußere radiale Stirnseitenfläche des ausgewählten Zahnrads ist vorzugsweise geschliffen bzw. poliert.

Insgesamt ermöglicht die vorliegende Erfindung eine verbesserte Schmierstoffversorgung und -verteilung insbesondere in Getrieben mit Stirnrädern, indem Schmierstoff von umlaufenden Getriebebauteilen mittels des an den Schmierstoffauffangbehälter angeformten Schmierstoffabstreifers abgeschöpft und in den Schmierstoffauffangbehälter geleitet wird. Von dort kann der gesammelte Schmierstoff drucklos beispielsweise in Richtung zu versorgender Lagerstellen verteilt werden.

Gemäß der vorliegenden Erfindung ist unterhalb des Schmierstoffabstreifers eine sich parallel zum Schmierstoffabstreifer erstreckende und durch diesen begrenzte schlitzartige Öffnung am Schmierstoffauffangbehälter gebildet. Auf diese Weise kann auch bei einer Drehrichtungsumkehr des ausgewählten Zahnrads von diesem mitgeführter Schmierstoff im Schmierstoffsammelbehälter aufgefangen werden.

Der Bodenabschnitt des Schmierstoffauffangbehälters kann mit dem stutzenartigen Teil an eine Rohrverbindung angeschlossen sein, über die eine Weiterleitung von gesammeltem Schmierstoff zu weiteren Schmierungsstellen im Getriebe erfolgt. Alternativ dazu kann der Bodenabschnitt des Schmierstoffauffangbehälters mit dem stutzenartigen Teil in eine Öffnung eines Getriebegehäuseteils gesteckt sein. Dabei kann der Bodenabschnitt des Schmierstoffauffangbehälters mit dem stutzenartigen Teil an der Öffnung mit dem Getriebegehäuseteil verklebt sein. Der Schmierstoffauffangbehälter ist vorzugsweise aus Kunststoff und im Vergleich zu Schmierstoffversorgungssystemen in Guß-Integralbauweise fertigungstechnisch einfacher und kostengünstiger zu realisieren, da eine aufwendige Nachbearbeitung wie bei Gußteilen nach dem Gußvorgang nicht erforderlich ist. Durch eine Verwendung von Schmierstoffauffangbehältern aus Kunststoff ergibt sich außerdem eine Gewichtseinsparung.

Der Schmierstoffauffangbehälter kann beispielsweise platzsparend in einem Bereich zwischen zwei Lagersitzen in einem Getriebegehäuseteil angeordnet ist. Darüber hinaus kann das ausgewählte Zahnrad ein Stirnrad sein, an dessen beiden Stirnseiten jeweils ein Schmierstoffauffangbehälter angeordnet ist. Dies ermöglicht ein besonders wirksames Abschöpfen von Schmierstoff mittels des jeweiligen an den Schmierstoffauffangbehälter angeformten Schmierstoffabstreifers.

Die vorliegende Erfindung wird nachfolgend an einem Ausführungsbeispiel anhand der Zeichnung näher erläutert. Es zeigt
- Figur 1: ein Getriebe mit zwei stirnseitig an einem Stirnrad angeordneten Schmierstoffauffangbehältern,
- Figur 2: eine Seitenansicht eines Schmierstoffauffangbehälters für das in Figur 1 dargestellte Getriebe,
- Figur 3: eine Draufsicht des Schmierstoffauffangbehälters gemäß Figur 2,
- Figur 4: eine Schnittdarstellung des Schmierstoffauffangbehälters gemäß Figur 2.

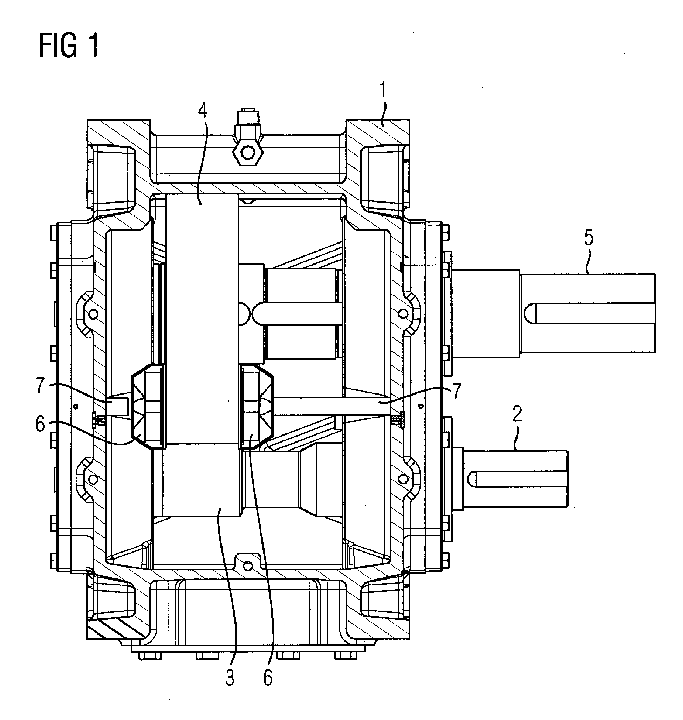

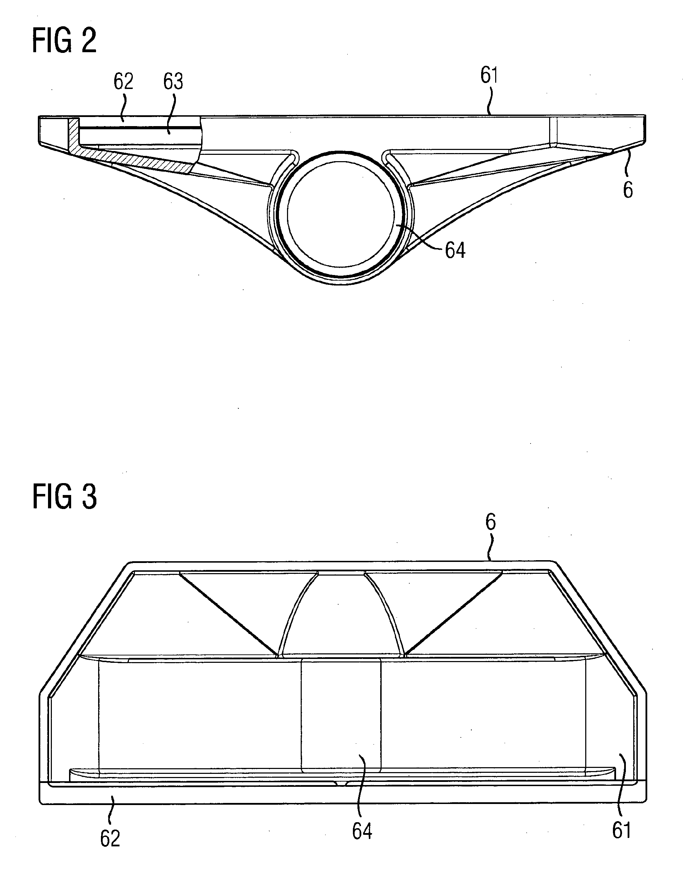

Das in Figur 1 dargestellte Getriebe weist zwei von einem Getriebegehäuse umfaßte Stirnräder 3-4 auf, die miteinander in Eingriff stehen. Durch jeweils eine Öffnung am Getriebegehäuse 1 treten eine Antriebswelle 2 und einer Abtriebswelle 5. An beiden Stirnseiten eines abtriebsseitigen Stirnrads 4 ist jeweils ein Schmierstoffauffangbehälter 6 aus Kunststoff angeordnet. Entsprechend der Seitenansicht gemäß Figur 2 und der Draufsicht gemäß Figur 3 umfaßt jeder Schmierstoffauffangbehälter 6 eine obere Öffnung 61 zum Auffangen von einfallendem oder eingespritztem Schmierstoff und einen Bodenabschnitt mit einem stutzenartigen Teil 64 zur Schmierstoffweiterleitung zu einer Schmierungsstelle im Getriebe. An der Öffnung 61 des Schmierstoffauffangbehälters 6 ist ein Schmierstoffabstreifer 62 angeformt, der als zum abtriebsseitigen Stirnrad 4 vorstehende Kante ausgebildet und auf eine äußere radiale Stirnseitenfläche des abtriebsseitigen Stirnrads 4 ausgerichtet ist. Dabei ist die äußere radiale Stirnseitenfläche des abtriebsseitigen Stirnrads 4 geschliffen bzw. poliert.

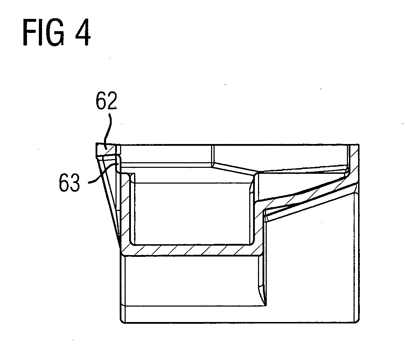

Wie auch anhand von Figur 4 zu erkennen ist, weist der Schmierstoffauffangbehälter 6 unterhalb des Schmierstoffabstreifers 62 eine sich parallel zum Schmierstoffabstreifer 62 erstreckende und durch diesen begrenzte schlitzartige Öffnung 63 auf. Der Bodenabschnitt des Schmierstoffauffangbehälters 6 ist mit dem stutzenartigen Teil 64 jeweils an eine Rohrverbindung 7 angeschlossen, über die eine Weiterleitung von gesammeltem Schmierstoff zu weiteren Schmierungsstellen im Getriebe erfolgt. Alternativ hierzu könnte der Bodenabschnitt des Schmierstoffauffangbehälters 6 mit dem stutzenartigen Teil 64 in eine Öffnung eines Getriebegehäuseteils gesteckt und an der Öffnung mit dem Getriebegehäuseteil verklebt sein.

Der Schmierstoffauffangbehälter 6 kann beispielsweise auch in einem Bereich zwischen zwei Lagersitzen in einem Getriebegehäuseteil angeordnet werden. Dies ist in den Figuren nicht explizit dargestellt.

Insgesamt bietet vorliegendes Getriebe den Vorteil, bei niedrigem Ölstand aus einem Ölsumpf von Verzahnungsteilen aufgenommenes Öl aufzufangen und über Ölversorgungskanäle zu mit Öl zu versorgenden Lagerstellen oder Zahneingriffspunkten zu führen. Hierfür bisher erforderliche Hilfsmittel, wie Pumpen, können entfallen. Zudem kann eine Ölversorgung realisiert werden, die unabhängig von einer Drehrichtung der Verzahnungsteile ist.

Die Anwendung der vorliegenden Erfindung ist nicht auf das vorliegende Ausführungsbeispiel beschränkt.

## Patentansprüche

1. Getriebe für industrielle Anwendungen mit
- zumindest zwei von einem Getriebegehäuse (1) umfaßten Zahnrädern (3,4), die miteinander in Eingriff stehen,
- einer Antriebswelle (2) und einer Abtriebswelle (5), die durch jeweils eine Öffnung am Getriebegehäuse (1) treten, und
- zumindest einem stirnseitig an einem ausgewählten Zahnrad (4) angeordneten Schmierstoffauffangbehälter (6), der eine obere Öffnung (61) zum Auffangen von einfallendem oder eingespritztem Schmierstoff und einen Bodenabschnitt mit einem stutzenartigen Teil (64) zur Schmierstoffweiterleitung zu einer Schmierungsstelle im Getriebe umfaßt,
**gekennzeichnet durch**
- einen an der oberen Öffnung (61) des Schmierstoffauffangbehälters (6) angeformten Schmierstoffabstreifer (62), der als zum ausgewählten Zahnrad (4) vorstehende Kante ausgebildet und auf eine äußere radiale Stirnseitenfläche des ausgewählten Zahnrads (4)ausgerichtet ist, wobei unterhalb des Schmierstoffabstreifers (62) eine sich parallel zum Schmierstoffabstreifer (62) erstreckende und **durch** diesen begrenzte schlitzartige Öffnung (63) am Schmierstoffauffangbehälter (6) gebildet ist.

2. Getriebe nach Anspruch 1,
bei dem der Bodenabschnitt des Schmierstoffauffangbehälters (6) mit dem stutzenartigen Teil (64) an eine Rohrverbindung (7) angeschlossen ist, über die eine Weiterleitung von gesammeltem Schmierstoff zu weiteren Schmierungsstellen im Getriebe erfolgt.

3. Getriebe nach Anspruch 1,
bei dem der Bodenabschnitt des Schmierstoffauffangbehälters (6) mit dem stutzenartigen Teil (64) in eine Öffnung eines Getriebegehäuseteils gesteckt ist.

4. Getriebe nach Anspruch 3,
bei dem der Bodenabschnitt des Schmierstoffauffangbehälters (6) mit dem stutzenartigen Teil (64) an der Öffnung mit dem Getriebegehäuseteil verklebt ist.

5. Getriebe nach einem der Ansprüche 1 bis 4,
bei dem der Schmierstoffauffangbehälter (6) aus Kunststoff ist.

6. Getriebe nach einem der Ansprüche 1 bis 5,
bei dem die äußere radiale Stirnseitenfläche des ausgewählten Zahnrads (4) geschliffen und/oder poliert ist.

7. Getriebe nach einem der Ansprüche 1 bis 6,
bei dem der Schmierstoffauffangbehälter (6) in einem Bereich zwischen zwei Lagersitzen in einem Getriebegehäuseteil angeordnet ist.

8. Getriebe nach einem der Ansprüche 1 bis 7,
bei dem das ausgewählte Zahnrad (4) ein Stirnrad ist, an dessen beiden Stirnseiten jeweils ein Schmierstoffauffangbehälter angeordnet ist.

## Claims

1. Gearing for industrial applications with
- at least two toothed wheels (3, 4), which engage with one another, enclosed by a gearing housing (1),
- a driveshaft (2) and a takeoff shaft (5) which each enter the gearing housing (1) through an opening, and
- at least one lubricant collection container (6) disposed on the end face side of a selected toothed wheel (4) having an upper opening (61) for capturing lubricant falling into it or sprayed into it and a floor section with a nozzle-type part (64) for conveying lubricant onwards to a lubrication point in the gearing,
**characterised by**
- a lubricant scraper (62) molded onto the upper opening (61) of the lubricant collection container (6) which is embodied as an edge projecting towards the selected toothed wheel (4) and is aligned towards an outer radial end face surface of the selected toothed wheel (4), wherein a slot-type opening (63) extending in parallel to the lubricant scraper (62) and delimited by the latter is formed on the lubricant collection container (6) below the lubricant scraper (62).

2. Gearing according to claim 1,
in which the floor section of the lubricant collection container (6) is connected by its nozzle-type part (64) to a pipe connection (7), via which collected lubricant is conveyed to further lubrication points in the gearing.

3. Gearing according to claim 1,
in which the floor section of the lubricant collection container (6) is plugged with its nozzle type part (64) into an opening of a gearing housing part.

4. Gearing according to claim 3,
in which the floor section of the lubricant collection container (6) is glued at the opening by its nozzle-type part (64) to the gearing housing part.

5. Gearing according to one of claims 1 to 4,
in which the lubricant collection container (6) is plastic.

6. Gearing according to one of claims 1 to 5,
in which the outer radial end face surface of the selected toothed wheel (4) is ground and/or polished.

7. Gearing according to one of claims 1 to 6,
in which the lubricant collection container (6) is disposed in an area between two bearing seats in a gearing housing part.

8. Gearing according to one of claims 1 to 7,
in which the selected toothed wheel (4) is a spur gear, on the two end face sides of which a lubricant collection container is disposed in each case.

## Revendications

1. Engrenage pour des applications industrielles, comprenant
- au moins deux roues ( 3, 4 ) dentées, qui sont entourées d'un carter ( 1 ) d'engrenage et qui engrènent l'une avec l'autre,
- un arbre ( 2 ) menant et un arbre ( 5 ) mené, qui entrent dans le carter ( 1 ) d'engrenage respectivement par une ouverture, et
- au moins un récipient ( 6 ) de captage de lubrifiant disposé du côté frontal sur une roue ( 4 ) dentée sélectionnée et comprenant une ouverture ( 61 ) supérieure, pour le captage de lubrifiant qui tombe ou qui est injecté, et une section de fond ayant une partie ( 64 ) de type tubulaire, pour l'acheminement du lubrifiant à un point de lubrification de l'engrenage,
**caractérisé par**
- un extracteur ( 62 ) de lubrifiant, qui est formé sur l'ouverture ( 61 ) supérieure du récipient ( 6 ) de captage de lubrifiant, qui est constitué sous la forme d'une arête en saillie par rapport à la roue ( 4 ) dentée sélectionnée et qui est dirigé sur une surface latérale radiale extérieure de la roue ( 4 ) dentée sélectionnée, une ouverture ( 63 ) en forme de fente, s'étendant parallèlement à l'extracteur ( 62 ) de lubrifiant et délimitée par celuici, étant formée sur le récipient ( 6 ) de captage de lubrifiant en dessous de l'extracteur ( 62 ) de lubrifiant.

2. Engrenage suivant la revendication 1,
dans lequel la section de fond du récipient ( 6 ) de captage de lubrifiant avec la partie ( 64 ) de type tubulaire est raccordée à une liaison ( 7 ) tubulaire, par laquelle s'effectue un acheminement du lubrifiant collecté vers d'autres points de lubrification de l'engrenage.

3. Engrenage suivant la revendication 1,
dans lequel la section de fond du récipient ( 6 ) de captage de lubrifiant avec la partie ( 64 ) de type tubulaire est enfilée dans une ouverture d'une partie du carter de l'engrenage.

4. Engrenage suivant la revendication 3,
dans lequel la section de fond du récipient ( 6 ) de captage de lubrifiant avec la partie ( 64 ) de type tubulaire est collée à l'ouverture à la partie du carter d'engrenage.

5. Engrenage suivant l'une des revendications 1 à 4,
dans lequel le récipient ( 6 ) de captage de lubrifiant est en matière plastique.

6. Engrenage suivant l'une des revendications 1 à 5,
dans lequel la surface latérale frontale radiale extérieure de la roue ( 4 ) dentée sélectionnée est meulée et/ou polie.

7. Engrenage suivant l'une des revendications 1 à 6,
dans lequel le récipient ( 6 ) de captage de lubrifiant est disposé dans une zone comprise entre deux logements de palier dans une partie du carter de l'engrenage.

8. Engrenage suivant l'une des revendications 1 à 7,
dans lequel la roue ( 4 ) dentée sélectionnée est une roue droite, sur les deux côtés frontaux de laquelle est disposé respectivement un récipient de captage de lubrifiant.
